# EUROPÄISCHE PATENTSCHRIFT

(11) **EP 1 911 696 B1**
(45) Veröffentlichungstag und Bekanntmachung des Hinweises auf die Patenterteilung: **17.09.2008**
(21) Anmeldenummer: 07019423.8
(22) Anmeldetag: 04.10.2007
(51) Int. Cl.: B65G 29/00, B65G 47/50, B65G 47/84, B67C 7/00

(54) **Vorrichtung zum Auffüllen von Lücken**
Device for filling cavities
Dispositif destiné à remplir des trous

(30) Priorität: 10.10.2006 DE 102006047848
(43) Veröffentlichungstag der Anmeldung: 16.04.2008
(73) Patentinhaber: KRONES AG, 93073 Neutraubling (DE)
(72) Erfinder: Hoene, Albrecht, 93138 Lappersdorf (DE); Giehrl, Robert, 93109 Wiesent (DE); Davidson, Hartmut, 93197 Zeitlarn (DE)

(56) Entgegenhaltungen:
- EP-A- 1 295 820
- DE-A1- 19 824 846

## Beschreibung

Die vorliegende Erfindung bezieht sich auf eine Vorrichtung zum Transportieren von Stückgut und insbesondere auf eine Vorrichtung zum Auffüllen von Lücken, die bei dem Transport des Stückguts entstehen können.

Die vorliegende Erfindung wird unter Bezugnahme auf Vorrichtungen zum Herstellen von Behältnissen beschrieben. Bei derartigen Vorrichtungen zum Herstellen von Behältnissen ist üblicherweise eine Vielzahl unterschiedlicher Bearbeitungseinheiten hintereinander angeordnet, beispielsweise zunächst eine Blas- oder Streckblasmaschine, die aus einem Rohling ein Behältnis formt und anschließend eine Etikettiermaschine, die das bereits fertig gestellte Behältnis mit einem Etikett versieht.

Zwischen diesen einzelnen Bearbeitungseinheiten sind üblicherweise Transporteinrichtungen vorgesehen, die eine Vielzahl von Greifelementen aufweisen, die die herzustellenden Behältnisse greifen und an die jeweils weitere Bearbeitungseinheit übergeben. Im fehlerfreien Betrieb ist dabei jedes Greifelement mit einem Behältnis besetzt und somit ist ein synchroner Betrieb der einzelnen Bearbeitungseinheiten möglich, da jeweils die Behältnisse in genauen Takten von einer Bearbeitungseinheit zur nächsten verbracht werden können, siehe z.B. EP 1 295 820 A1.

In der Praxis kommt es jedoch des Öfteren zu unbesetzten Greifelementen beispielsweise aufgrund von Bearbeitungsfehlern in der Streckblasmaschine oder aufgrund fehlerhafter Behältnisse, die aussortiert wurden. Derartige unbesetzte Positionen führen wiederum bei einer nachgeordneten Bearbeitungseinheit wie der Etikettiermaschine zu erheblichen Problemen, da die bereits vorbereiteten Etiketten nicht an ein vorgesehenes Behältnis angebracht werden können. In solchen Fällen kann es dann zu Betriebsstörungen kommen.

Aus dem Stand der Technik ist es bekannt, als Gegenmaßnahme die Etikettiermaschine jeweils anzuhalten oder die Etikettierung zu verhindern, wenn ein unbesetztes Greifelement bzw. eine Transportlücke bei dieser ankommt. Dazu sind jedoch aufgrund der hohen Transportgeschwindigkeiten sehr hohe Beschleunigungen oder Verzögerungen notwendig, die auf Dauer die Etikettiermaschine stark belasten. Gleichzeitig wird in diesem Fall der synchrone Betrieb zwischen den einzelnen Bearbeitungseinheiten gestört.

Der vorliegenden Erfindung liegt daher die Aufgabe zugrunde, eine Vorrichtung zur Verfügung zu stellen, die einen synchronen Betrieb mehrerer aufeinander folgender Bearbeitungseinheiten auch bei Auftreten von Lücken bzw. unbesetzten Greifelementen ermöglicht.

Dies wird erfindungsgemäß durch eine Vorrichtung nach Anspruch 1 und ein Verfahren nach Anspruch 15 erreicht. Vorteilhafte Ausführungsformen und Weiterbildungen sind Gegenstand der Unteransprüche.

Die erfindungsgemäße Vorrichtung zum Transportieren von Stückgut, insbesondere von Behältnissen, weist eine erste Transporteinrichtung auf, welche das Stückgut von einer ersten Bearbeitungseinheit zu einer zweiten Bearbeitungseinheit transportiert. Bearbeitungseinheiten können quasi beliebige Einrichtungen sein, die in einem Produktionsprozess in Produktionsrichtung nebeneinander stehen und Stückgut bearbeiten. Z.B. kann es sich bei den Bearbeitungseinheiten um Maschinen aus dem Lebensmittelverpackungsbereich wie Etikettiermaschinen, Streckblasmaschinen, Füllmaschinen, Verschließer usw. handeln.
Dabei sind an der ersten Transporteinrichtung Greifelemente für das Stückgut angeordnet. Unter Greifelement ist im Allgemeinen eine Einrichtung zu verstehen, bei der die zu transportierenden Gegenstände an einer definierten Position gehalten werden. Im Speziellen sind unter Greifelemente klammerartige Elemente zu verstehen, die das Halten der Behälter an definierten Positionen ermöglicht. Die Greifelemente der Transport- / Puffereinrichtung können verschieden ausgebildet sein, so z.B. als Hals- oder Rumpfgreifer. Die Hals- bzw. Rumpfgreifer können sowohl aktiv als auch passiv steuerbar sein und sie sind bezüglich ihrer Greifhöhe am Behälter nicht eingeschränkt. Sie können sowohl einteilig als auch mehrteilig ausgebildet sein. Vorzugsweise handelt es sich bei den Greifelementen um Klammern.

Erfindungsgemäß ist eine erste Puffereinrichtung mit einer vorgegebenen Anzahl von Greifelementen für das Stückgut vorgesehen, die derart mit der Transporteinrichtung zusammenwirkt, dass sie vereinzeltes Stückgut an ausgewählte oder auswählbare Greifelemente der Transporteinrichtung übergeben kann. Unter einer Transporteinrichtung werden allgemein solche Einrichtungen verstanden, die geeignet sind, um Stückgut und hier insbesondere Behältnisse zu transportieren. Insbesondere kann es sich dabei um umlaufende Transporteinrichtungen handeln, das heißt Transporteinrichtungen, die eine Vielzahl von umlaufenden Greifelementen aufweisen. Daneben kann eine Transporteinrichtung jedoch auch mehrteilig ausgebildet sein, und beispielsweise eine erste umlaufende Transporteinrichtung mit Greifelementen und einen daran sich anschließenden Transportstern aufweisen.

Durch die erfindungsgemäße Puffereinrichtung, die selbst nicht direkt an dem Transportprozess von einer Bearbeitungseinheit zur anderen Bearbeitungseinheit beteiligt ist, können Behältnisse angeordnet sein, die jeweils zum Auffüllen von entstandenen Lücken verwendet werden. Damit ist in dieser Puffereinrichtung insbesondere eine Vielzahl von bereits fertig gestellten, jedoch noch nicht etikettierten Behältnissen angeordnet. Durch die erfindungsgemäße Puffereinrichtung können in der Transporteinrichtung entstandene Lücken gefüllt werden und damit ist es möglich, dass die beiden Bearbeitungseinheiten auch bei Auftreten von Lücken zwischen den beiden Bearbeitungseinheiten weiterhin synchron laufen können, da diese Lücken mit Hilfe der Puffereinrichtung aufgefüllt werden. Durch die gezielte Übergabe von Behältnissen an ausgewählte oder auswählbare Greifelemente können auftretende Lücken geschlossen werden.

Bei einer bevorzugten Ausführungsform weist die Vorrichtung eine erste Entkopplungsvorrichtung auf, die zwischen der Transporteinrichtung und der ersten Puffereinrichtung angeordnet ist und die vereinzeltes Stückgut von der ersten Puffereinrichtung übernimmt und an die Transporteinrichtung weiterleitet. Wie oben erwähnt, ist die Puffereinrichtung üblicherweise zumindest teilweise mit Behältnissen besetzt. Damit würden die Behältnisse der Puffereinrichtung und die Behältnisse der Transporteinrichtung aneinander stoßen, wenn die Transporteinrichtung und die Puffereinrichtung direkt zusammenwirken würden. Daher ist eine Entkopplungseinrichtung vorgesehen, die derartige Kollisionen verhindert.

Vorzugsweise weist die erste Entkopplungseinrichtung ebenfalls eine Vielzahl von Greifelemente auf, wobei diese Greifelemente mehrheitlich unbesetzt sind. Auf diese Weise ist eine Entkopplung der Puffereinrichtung und der Transporteinrichtung möglich. Genauer gesagt ist vorzugsweise die Entkopplungseinrichtung im Normalbetrieb, das heißt, wenn keine Lücken auftreten, unbesetzt. Falls eine Lücke auftritt, dient die Entkopplungseinheit dazu, ein Behältnis aus der Puffereinrichtung an die Transporteinrichtung zu übergeben.

Vorzugsweise ist eine zweite Entkopplungseinrichtung vorgesehen, die so mit der ersten Puffereinrichtung in Verbindung steht, dass sie Stückgut an diese übergeben kann sowie eine zweite Puffereinrichtung mit einer vorgegebenen Anzahl an Greifelementen, die so mit der zweiten Entkopplungseinrichtung in Verbindung steht, dass sie Stückgut an diese übergeben kann. Bei dieser Ausführungsform sind daher zwei Puffereinrichtungen und zwei Entkopplungseinrichtungen vorgesehen. Durch diese Vorgehensweise kann, wie unter Bezugnahme auf die Zeichnungen genauer erläutert wird, erreicht werden, dass unabhängig von der Position der auftretenden Lücke auch mehrere Lücken nacheinander gefüllt werden können.

Gemäß einer Weiterbildung der Erfindung sind nicht nur zwei Entkopplungs- und Puffereinrichtungen vorhanden, sondern mehrere. Daraus ergibt sich der Vorteil einer beliebig großen Pufferstrecke.

Bei einer weiteren bevorzugten Ausführungsform weist die zweite Puffereinrichtung eine andere Zahl an Greifelementen auf, als die erste Puffereinrichtung. Besonders bevorzugt ist die Differenz zwischen der Anzahl der Greifelemente der ersten Puffereinrichtung und der Anzahl der Greifelemente der zweiten Puffereinrichtung dem Betrag nach eins. Dies bedeutet, dass die zweite Puffereinrichtung besonders bevorzugt ein Greifelement mehr oder weniger als die erste Puffereinrichtung aufweist. Auf diese Weise kann, wie ebenfalls unter Bezugnahme auf die Figuren erläutert wird, erreicht werden, dass Lücken unabhängig von ihrer jeweiligen Position wieder aufgefüllt werden können.

Vorzugsweise ist eine Detektionseinrichtung vorgesehen, die erkennt ob die Greifelemente der ersten Transporteinrichtung mit Stückgut besetzt sind. Diese kann beispielsweise optische, kapazitive, induktive oder Ultraschallsensoren aufweisen oder auch mechanisch beziehungsweise auf Berührungsbasis arbeitende Sensoren. Falls durch die Detektionseinrichtung eine Leerstelle erkannt wird, kann dies an eine Steuereinrichtung weitervermittelt werden und auf diese Weise die Übergabe eines Behältnisses aus der ersten Puffereinrichtung an die Transporteinrichtung eingeleitet werden.

Vorzugsweise sind die Bewegungen aller Puffereinrichtungen und Entkopplungseinrichtungen aufeinander synchronisiert. Auf diese Weise können ruckartige Beschleunigungs- oder Verzögerungsbewegungen verhindert werden.

Bei einer weiteren bevorzugten Ausführungsform ist die Bewegung der ersten Puffereinrichtung unabhängig von der Bewegung der Transporteinrichtung steuerbar. Dabei ist es beispielsweise möglich, an der ersten Transporteinrichtung zunächst eine Entkopplungseinrichtung und dann die erste Puffereinrichtung anzuordnen und insbesondere keine weitere Puffereinrichtung vorzusehen. In diesem Falle könnte beispielsweise die erste Puffereinrichtung solange stehen, bis eine Fehlposition einer Transporteinrichtung erkannt wird und dann gezielt diese leere Position mit einem Behältnis besetzen. Auch wäre es möglich, dass sich in diesem Fall die Puffereinrichtung im Normalbetrieb synchron mit der ersten Transporteinrichtung bewegt und nur in den Fällen angehalten wird, in denen eine Lücke nicht mehr durch ein Behältnis der Puffereinrichtung besetzt werden kann, da an der zu der Lücke korrespondierenden Position der Puffereinrichtung ebenfalls bereits ein leeres Greifelement angeordnet ist.

Bei einer weiteren bevorzugten Ausführungsform ist die Entkopplungseinrichtung als Entkopplungsstern ausgebildet, das heißt, es ist eine Vielzahl von Greifelementen vorgesehen, die bevorzugt im Wesentlichen gleichmäßig in Umfangsrichtung der Entkopplungseinrichtung angeordnet sind.

Die vorliegende Erfindung ist weiterhin auf eine Anlage zur Herstellung und Bearbeitung von Stückgut, und insbesondere von Behältnissen, mit einer Vorrichtung der oben beschriebenen Art gerichtet. Vorzugsweise weist die Anlage eine Streckblasvorrichtung für die Behältnisse und eine Etikettiereinrichtung auf und die Vorrichtung zum Transportieren von Stückgut ist in der Transportrichtung der Behältnisse zwischen der Streckvorrichtung und der Etikettiereinrichtung angeordnet.

Die vorliegende Erfindung ist weiterhin auf ein Verfahren zum Transportieren von Stückgut, insbesondere von Behältnissen, von einer ersten Bearbeitungseinheit in eine zweite Bearbeitungseinheit über eine Transporteinrichtung gerichtet. Dabei wird in einem ersten Verfahrensschritt ein Belegungszustand der einzelnen Greifelemente der Transporteinrichtung ermittelt. Genauer wird überprüft, ob die einzelnen Greifelemente mit Stückgut, das heißt insbesondere mit Behältnissen bestückt sind. In einem weiteren Verfahrensschritt wird vereinzeltes Stückgut von einer ersten Puffereinrichtung an die Transporteinrichtung übergeben, wenn ein nicht belegtes Greifelement bzw. dessen Position an/in der Transporteinrichtung von der Detektionseinrichtung erkannt wird. Dabei wird unter einer Übergabe von vereinzeltem Stückgut verstanden, dass nicht mehrere Stücke beispielsweise Behältnisse auf einmal übergeben werden, sondern nur jeweils einzelne Behältnisse.

Auf diese Weise können von der Detektionseinrichtung erkannte Lücken wieder aufgefüllt werden, bevor sie die zweite Bearbeitungseinheit erreichen.

Vorzugsweise steht die erste Puffereinrichtung über eine erste Entkopplungseinrichtung derart mit der Transporteinrichtung in Verbindung, dass sie Behältnisse an diese übergeben kann.

In einem weiteren bevorzugten Verfahren ist eine zweite Puffereinrichtung vorgesehen, die wenigstens zeitweise Stückgut an die erste Puffereinrichtung übergibt.

Vorzugsweise wird die zweite Puffereinrichtung im Wesentlichen vollständig geleert. Durch geeignete Dimensionierungen der ersten und der zweiten Puffereinrichtung, die unten eingehender erläutert wird, kann die im Wesentlichen vollständige Leerung der zweiten Puffereinrichtung erreicht werden.

Vorzugsweise wird die zweite Puffereinrichtung nach jeder vollständigen Leerung in einem Arbeitsgang vollständig mit Stückgut aufgefüllt. Während dieses Auffüllens kann beispielsweise eine Etikettiermaschine, die sich an die Transporteinrichtung anschließt, abgestellt werden.

Weitere Vorteile und Ausführungsformen ergeben sich aus den beigefügten Zeichnungen.
Darin zeigen:

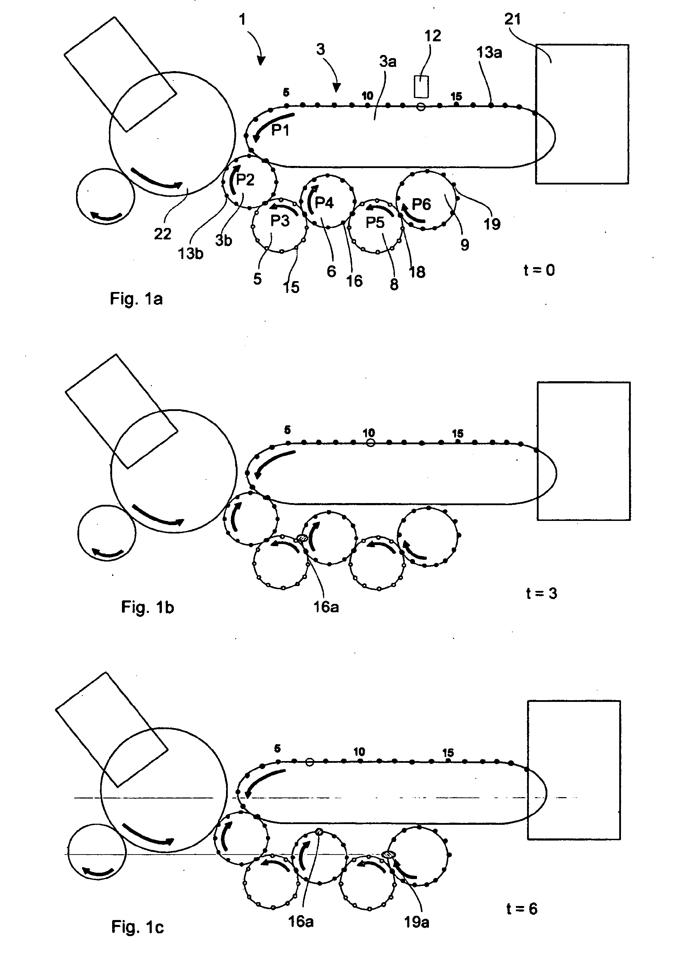

- Fig. 1a: eine erfindungsgemäße Vorrichtung zum Transportieren von Stückgut;
- Fig. 1b: die Vorrichtung aus Figur 1a zu einem weiteren Zeitpunkt;
- Fig. 1c: die Vorrichtung aus Figur 1a zu einem weiteren Zeitpunkt;

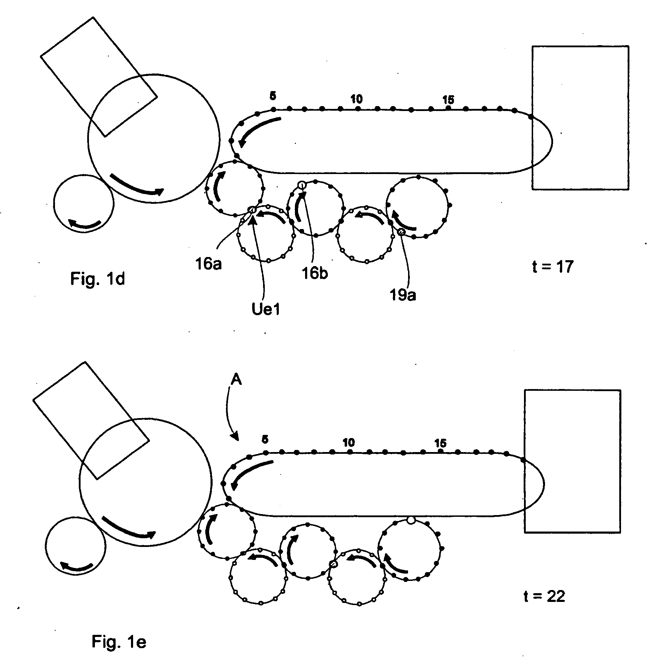

- Fig. 1d: die Vorrichtung aus Figur 1a zu einem weiteren Zeitpunkt und
- Fig. 1e: die Vorrichtung aus Figur 1a zu einem weiteren Zeitpunkt.

Figur 1a zeigt eine erfindungsgemäße Vorrichtung 1 zum Transportieren von Stückgut mit einer Transporteinrichtung 3, die zwischen zwei Bearbeitungseinheiten 21 und 22 angeordnet ist. Dabei handelt es sich bei der Bearbeitungseinheit 21 um eine Streckblasmaschine, bei der Behältnisse mittels Luftdruck und einer Reckstange aufgeblasen und gereckt werden. Das Bezugszeichen 22 bezieht sich auf eine Etikettiermaschine, die dazu dient, um bereits erzeugte Behältnisse mit Etiketten zu versehen.

Die Vorrichtung 1 zum Transportieren von Stückgut bzw. die Transporteinrichtung 3 weist hier einen umlaufenden Transportträger 3a auf, an dem eine Vielzahl von Greifelementen 13a bzw. Greifarmen (nur schematisch gezeigt) angeordnet ist. Diese Greifelemente sind dabei durch Punkte beziehungsweise kleine Kreise dargestellt. Dabei bezeichnen die ausgefüllten Kreise jeweils solche Greifelemente, die von einem (nicht gezeigten) Behältnis besetzt sind und leere Kreise solche Greifelemente, die nicht besetzt sind. Stromabwärts bezüglich des Transportträgers 3a ist ein Transportstern 3b angeordnet, der ebenfalls Bestandteil der Transporteinrichtung 3 ist. Dieser Transportstern 3b dient dazu, um die Behältnisse von dem Transportträger 3a auf die Etikettiermaschine 22 zu übertragen. Auch an diesem Transportstern sind Greifelemente 13b vorgesehen.

Das Bezugszeichen 5 kennzeichnet eine erste Entkopplungseinrichtung mit Greifelementen 15, die mit dem Transportstern 3b zusammenwirkt. Diese Entkopplungseinrichtung 5 dient dazu, um Kollisionen zwischen Greifelementen, die jeweils mit Behältnissen besetzt sind, zu vermeiden.

Das Bezugszeichen 6 bezieht sich auf eine erste Puffereinrichtung, die wiederum mit der ersten Entkopplungseinrichtung 5 zusammenwirkt. Aus dieser ersten Puffereinrichtung 6 können Behältnisse entnommen werden und über erste Entkopplungseinrichtung 5 an den Transportstern 3b übergeben werden, falls in dem Transportträger 3a Lücken festgestellt werden.

Das Bezugszeichen 8 bezieht sich auf eine zweite Entkopplungseinrichtung, die ebenfalls mit Greifelementen 18 ausgestattet ist und das Bezugszeichen 9 auf eine zweite Puffereinrichtung, die mit Greifelementen 19 versehen ist. Diese zweite Puffereinrichtung 9 dient zum Wiederbefüllen der ersten Puffereinrichtung 6. Wie eingangs erwähnt, sind bei einer bevorzugten Ausführungsform sowohl der Transportträger 3a als auch sämtliche Puffereinrichtungen und Entkopplungseinrichtungen aufeinander synchronisiert. Damit kann, sobald mittels einer Detektionseinrichtung 12 das Fehlen eines Behältnisses erkannt wird, und was durch den leeren Kreis unterhalb der Detektionseinrichtung 12 dargestellt ist, bereits ermittelt und vorherbestimmt werden, welches Greifelement 16 der ersten Puffereinrichtung 6 ein Behältnis an den Transportstern 3b übergeben muss, um die entsprechende in Transportrichtung "wandernde" Lücke wieder aufzufüllen. Würde man bei der in Figur 1 gezeigten Ausführungsform auf die zweite Puffereinrichtung 9 verzichten, so würde nach der Übergabe von Behältnissen von der ersten Puffereinrichtung 6 an den Transportstern 3b eine dauerhafte Lücke entstehen. Falls nun an dem Transportträger 3a eine weitere Lücke erkannt wird, wäre es im ungünstigsten Fall denkbar, dass diese Lücke mit einem Behältnis aufgefüllt werden müsste, das jedoch an dem entsprechenden Greifelement 16 der Puffereinrichtung 6 nicht mehr vorhanden ist.

Zu diesem Zweck ist die zweite Puffereinrichtung 9 vorgesehen, die die erste Puffereinrichtung 6 wieder auffüllt.

Wie der Betrachter erkennt, sind an der ersten Puffereinrichtung 6 und der zweiten Puffereinrichtung 9 unterschiedliche Anzahlen an Greifelementen 16 bzw. 19 vorgesehen, genauer gesagt sind an der ersten Puffereinrichtung 6 zwölf Greifelemente 16 und an der zweiten Puffereinrichtung 9 dreizehn Greifelemente 19 vorgesehen. Auf diese Weise kann sichergestellt werden, dass jede Lücke, die an einem der Greifelemente 16 der ersten Puffereinrichtung 6 entsteht, durch ein Behältnis aufgefüllt werden kann, welches in einem der Greifelemente 19 der zweiten Puffereinrichtung 9 vorgesehen ist. Ebenso wäre es jedoch auch möglich, dass an der zweiten Puffereinrichtung 9 ein Greifelement 19 weniger vorgesehen ist, als an der ersten Puffereinrichtung 6. Allgemein gesprochen ist entscheidend, dass die Anzahl der Greifelemente 19 die an der zweiten Puffereinrichtung 9 vorgesehen sind, nicht gleich der Anzahl der Greifelemente 16 ist, die an der ersten Puffereinrichtung 6 angeordnet sind.

Das Bezugszeichen 8 bezieht sich auf eine Entkopplungsrichtung die wiederum die beiden Puffereinrichtungen 6 und 9 miteinander verbindet und ebenfalls Greifelemente 18 aufweist. Bei der hier gezeigten Ausführungsform weisen auf die Entkopplungseinrichtung 5 und 8 jeweils 12 Greifelemente auf. Es wären hier jedoch auch andere Anzahlen an Greifelementen denkbar.

Unter Bezugnahme auf die Figuren 1b - 1e wird das erfindungsgemäße Verfahren zum Auffüllen von Lücken beschrieben. Wie oben erwähnt, wurde durch die Detektionseinrichtung 12 ein nicht besetztes Greifelement detektiert, welches hier an der Position 13 liegt. Dabei zeigt Figur 1a die Situation zum Zeitpunkt t=0. Figur 1b zeigt die Situation zum Zeitpunkt t=3, das heißt nach drei weiteren Taktschritten der Vorrichtung. Hier ist das unbesetzte Greifelement an die Position 10 gewandert. Gleichzeitig wird von einer (nicht gezeigten) Steuereinrichtung ein Greifelement 16a, das an der ersten Puffereinrichtung 6 angeordnet ist, identifiziert, welches letztlich ein Behältnis zur Auffüllung der Lücke zur Verfügung stellen soll.

Figur 1c zeigt eine weitere Position der erfindungsgemäßen Vorrichtung zum Zeitpunkt t=6. Hier ist die Leerstelle an die Position 7 gewandert und auch das identifizierte Greifelement 16a ist entsprechend um drei Positionen weitergewandert. Dabei beziehen sich die Pfeile P1 bis P6 auf die jeweiligen Drehrichtungen der einzelnen Transportbänder, Entkopplungseinrichtungen beziehungsweise Puffereinrichtungen. In Figur 1c wurde weiterhin ein Greifelement 19a der zweiten Puffereinrichtung identifiziert, die wiederum zum Auffüllen der ersten Puffereinrichtung 16a dient.

Figur 1d zeigt die Situation zum Zeitpunkt t=17, das heißt elf Stationen weiter im Vergleich zu der in Figur 1c gezeigten Situation. Hierbei ist die Leerstelle im weiteren Verlauf von der Transporteinrichtung 3a auf den Transportstern 3b gewandert und hier bis zu dem Übergabepunkt UE1, der zwischen dem Transportstern 3b und der ersten Entkopplungseinrichtung 5 liegt.

In den Figuren 1b- 1e ist jeweils ein ausgewähltes Behältnis durch eine schraffierte Fläche dargestellt. In Figur 1d erkennt man, dass das Behältnis 16a, das in Figur 1c gezeigt ist, mittlerweile ebenfalls 11 Stationen weitergewandert ist und damit von der ersten Puffereinrichtung 6 an die erste Entkopplungseinrichtung 5 und ebenfalls bis zu der Position Ue1 gelangt ist. An dieser Position wird das Behältnis an das leere Greifelement 13b des Transportsterns 3b übergeben und damit die ursprünglich detektierte Lücke geschlossen. Damit kann die Etikettiermaschine 22, ohne angehalten, verzögert beziehungsweise beschleunigt zu werden, weiter betrieben werden.

Wie in Figur 1d gezeigt, ist nunmehr an der ersten Puffereinrichtung eine Lücke beziehungsweise ein unbesetztes Greifelement 16b entstanden. Gleichzeitig ist das Behältnis an Greifelement 19a, das bereits auf der zweiten Puffereinrichtung 9 identifiziert wurde, um elf Stationen weitergewandert. Figur 1e zeigt eine weitere Situation zum Zeitpunkt t=22, das heißt fünf Schritte nach der in Figur 1d gezeigten Situation.

Man erkennt, dass das Greifelement 19a sein Behältnis über die Entkopplungseinrichtung 8 an die erste Puffereinrichtung 6 übergeben hat. Damit ist hier die erste Puffereinrichtung 6 wieder voll besetzt und die zweite Puffereinrichtung 9 weist eine Lücke bei dem Greifelement 19a auf.

Falls nun an der Transporteinrichtung 3 weitere Lücken entdeckt werden, können diese in entsprechender Weise wieder durch die Puffereinrichtungen 6 und 9 aufgefüllt werden.

Der Vorteil an der hier gezeigten Lösung ist, dass vergleichsweise wenig Entwicklung von mechanischer Hardware notwendig ist, sondern bereits auf vorhandene Elemente zurückgegriffen werden kann. Daneben sind, wie eingangs erwähnt, keine starken Beschleunigungen oder Verzögerungen an den einzelnen Bearbeitungseinheiten notwendig, um auf Lücken zu reagieren. Genauer gesagt werden entstehende Lücken insbesondere an der Etikettiereinrichtung vermieden und auf die Puffereinrichtungen beziehungsweise Puffersterne verschoben.

Bei einem erfindungsgemäßen Verfahren ist es möglich, die zweite Puffereinrichtung 9 zunächst vollständig zu leeren (d.h. es können Cluster gebildet werden) und alsdann in einem einzigen Arbeitsschritt wieder vollständig aufzufüllen. Während dieser Auffüllung kann beispielsweise die Etikettiermaschine angehalten werden. Weiterhin ist noch zu erwähnen, dass die erste und zweite Puffereinrichtung beliebig dimensionierbar sind und beispielsweise auch die zweite Puffereinrichtung wesentlich größer durch eine Kette mit einer wesentlich höheren Anzahl an Greifelementen ausgeführt werden kann.

Es wäre jedoch auch möglich, die hier gezeigte Anordnung mit den Puffeinrichtungen und Entkopplungseinrichtungen an einer anderen Stelle anzuordnen, wie beispielsweise an der in Figur 1e gezeigten Position A. Dabei könnte in dieser Position direkt die erste Entkopplungseinrichtung 5 und in der Folge die weiteren Puffer- und Entkopplungseinrichtungen 6, 8, 9 vorgesehen sein. Bei einer weiteren Ausführungsform wäre es auch möglich, nur eine erste Puffereinrichtung 6 vorzusehen und diese nicht zwangsläufig mit der Transporteinrichtung 3 zu synchronisieren. In diesem Fall könnten die Behältnisse aus der ersten Puffereinrichtung 6 entnommen werden, um Lücken aufzufüllen. Falls es zu derjenigen Situation kommt, in der eine Lücke nicht ausgefüllt werden könnte, da an der Puffereinrichtung 6 eine entsprechende Lücke ist, wäre es möglich, die erste Puffereinrichtung während eines Zeitschritts anzuhalten, um eine weitere Auffüllung der Lücke zu ermöglichen. Auch wäre es in diesem Fall bevorzugt denkbar, die erste Puffereinrichtung mit einer wesentlich höheren Anzahl an Greifelementen zu bestücken. In diesem Falle wäre es denkbar, die Puffereinrichtung und Entkopplungseinrichtung entsprechend anzupassen, beispielsweise mit Greifelementen, welche in der jeweils radialen Richtung der einzelnen Puffer- und Entkopplungseinrichtung bewegt werden können, um so eine Kollision von besetzten Greifelementen zu vermeiden.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung zum Transportieren von Stückgut, insbesondere von Behältnissen mit einer ersten Transporteinrichtung (3, 3a, 3b) welche das Stückgut von einer ersten Bearbeitungseinheit (21) zu einer zweiten Bearbeitungseinheit (22) transportiert, wobei an der ersten Transporteinrichtung Greifelemente (13a, 13b) für das Stückgut angeordnet sind, **dadurch gekennzeichnet, dass**, eine erste Puffereinrichtung (6) mit einer vorgegebenen Anzahl von Greifelementen (16) für das Stückgut vorgesehen ist, die derart mit der Transporteinrichtung (3, 3a, 3b) zusammenwirkt, dass sie vereinzeltes Stückgut an ausgewählte oder auswählbare Greifelemente (13a, 13b) der Transporteinrichtung (3, 3a, 3b) übergeben kann.

2. Vorrichtung nach Anspruch 1, **dadurch gekennzeichnet, dass** diese eine erste Entkopplungseinrichtung (5) aufweist, die zwischen der Transporteinrichtung (3, 3a, 3b) und der ersten Puffereinrichtung (6) angeordnet ist und vereinzeltes Stückgut von der ersten Puffereinrichtung (6) übernimmt und an die Transporteinrichtung (3, 3a, 3b) weiterleitet.

3. Vorrichtung nach Anspruch 1, **dadurch gekennzeichnet, dass** die Greifelemente (15) der ersten Entkopplungseinrichtung (5) mehrheitlich unbesetzt sind.

4. Vorrichtung nach wenigstens einem der vorangegangenen Ansprüche, **dadurch gekennzeichnet, dass** eine zweite Entkopplungseinrichtung (8) vorgesehen ist, die so mit der ersten Puffereinrichtung (6) in Verbindung steht, dass sie Stückgut an diese übergeben kann, sowie eine zweite Puffereinrichtung (9) mit einer vorgegebenen Anzahl an Greifelementen (19), die so mit der zweiten Entkopplungseinrichtung (8) in Verbindung steht, dass sie Stückgut an diese übergeben kann.

5. Vorrichtung nach Anspruch 4, **dadurch gekennzeichnet, dass** weitere Entkopplungseinrichtungen und Puffereinrichtungen vorhanden sind, die jeweils so miteinander in Verbindung stehen, dass sie Stückgut übergeben können.

6. Vorrichtung nach Anspruch 4, **dadurch gekennzeichnet, dass** die zweite Puffereinrichtung (9) eine andere Anzahl an Greifelementen (19) aufweist als die erste Puffereinrichtung (6).

7. Vorrichtung nach Anspruch 4, **dadurch gekennzeichnet, dass** die Differenz zwischen der Anzahl der Greifelemente (16) der ersten Puffereinrichtung (6) und der Anzahl der Greifelemente (19) der zweiten Puffereinrichtung (9) dem Betrag nach 1 ist.

8. Vorrichtung nach wenigstens einem der vorangegangenen Ansprüche, **dadurch gekennzeichnet, dass** eine Detektionseinrichtung (12) vorgesehen ist, die erkennt, ob Greifelemente (13a, 13b) der ersten Transporteinrichtung (3, 3a, 3b) mit Stückgut besetzt sind.

9. Vorrichtung nach wenigstens einem der vorangegangenen Ansprüche, **dadurch gekennzeichnet, dass** die Bewegungen aller Puffereinrichtungen (6, 9) und Entkopplungseinrichtungen (5, 8) aufeinander synchronisiert sind.

10. Vorrichtung nach Anspruch 1, **dadurch gekennzeichnet, dass** die Bewegung der ersten Puffereinrichtung (6) unabhängig von der Bewegung der Transporteinrichtung (3, 3a, 3b) steuerbar ist.

11. Vorrichtung nach wenigstens einem der vorangegangenen Ansprüche, **dadurch gekennzeichnet, dass** die Entkopplungseinrichtung (5) als Entkopplungsstern ausgebildet ist.

12. Vorrichtung nach wenigstens einem der vorangegangenen Ansprüche, **dadurch gekennzeichnet, dass** die Greifelemente (13a, 13b) als Hals- und / oder Rumpfgreifer ausgebildet sind.

13. Anlage zur Herstellung und Bearbeitung von Stückgut und insbesondere von Behältnissen mit einer Vorrichtung zum Transportieren von Stückgut nach wenigstens einem der Ansprüche 1 bis 11.

14. Anlage nach Anspruch 13, wobei die Anlage eine Blasvorrichtung für die Behältnisse und eine Etikettiereinrichtung aufweist und die Vorrichtung zum Transportieren von Stückgut in der Transportrichtung der Behältnisse zwischen der Blasvorrichtung und der Etikettiereinrichtung angeordnet ist.

15. Verfahren zum Transportieren von Stückgut, insbesondere von Behältnissen von einer ersten Bearbeitungseinheit (21) in eine zweite Bearbeitungseinheit (22) über eine Transporteinrichtung (3, 3a, 3b) mit den Schritten:
- Ermittlung eines Belegungszustandes der einzelnen Greifelemente (13a, 13b) der Transporteinrichtung durch eine Detektionseinrichtung (12);
- Übergabe von vereinzeltem Stückgut von einer ersten Puffereinrichtung (6) an die Transporteinrichtung (3, 3a, 3b), wenn ein nicht belegtes Greifelement von der Detektionseinrichtung (12) erkannt wird.

16. Verfahren nach Anspruch 13, **dadurch gekennzeichnet, dass** die erste Puffereinrichtung (6) über eine erste Entkopplungseinrichtung (5) derart mit der Transporteinrichtung (3, 3a, 3b) in Verbindung steht, dass sie Behältnisse an diese übergeben kann.

17. Verfahren nach wenigstens einem der vorangegangenen Ansprüche 13 - 14, **dadurch gekennzeichnet, dass** eine zweite Puffereinrichtung (9) vorgesehen ist, die wenigstens zeitweise Stückgut an die erste Puffereinrichtung (6) übergibt.

18. Verfahren nach wenigstens einem der vorangegangenen Ansprüche 13 - 15, **dadurch gekennzeichnet, dass** die zweite Puffereinrichtung im Wesentlichen vollständig geleert wird.

19. Verfahren nach wenigstens einem der vorangegangenen Ansprüche 15 - 16, **dadurch gekennzeichnet, dass** die zweite Puffereinrichtung (9) nach ihrer vollständigen Leerung in einem Arbeitsgang vollständig mit Stückgut aufgefüllt wird.

## Claims

1. Apparatus for conveying individual articles, in particular containers, having a first conveying apparatus (3, 3a, 3b) which transports the individual articles from a first processing unit (21) to a second processing unit (22), gripper elements (13a, 13b) for the individual articles being arranged on the first conveying apparatus, **characterised in that** a first buffer device (6) with a predetermined number of gripper elements (16) for the individual articles is provided which interacts with the conveying apparatus (3, 3a, 3b) in such a way that it can transfer separated individual articles to selected or selectable gripper elements (13a, 13b) of the conveying apparatus (3, 3a, 3b).

2. Apparatus according to claim 1, **characterised in that** said apparatus possesses a first decoupling device (5) which is arranged between the conveying apparatus (3, 3a, 3b) and the first buffer device (6) and takes over separated individual articles from the first buffer device (6) and transfers them to the conveying apparatus (3, 3a, 3b).

3. Apparatus according to claim 1, **characterised in that** the majority of the gripper elements (15) of the first decoupling device (5) are unoccupied.

4. Apparatus according to one of the preceding claims, **characterised in that** a second decoupling device (8) is provided which is connected with the first buffer device (6) in such a way that it can transfer individual articles to this, as well as a second buffer device (9) with a predetermined number of gripper elements (19) which is connected with the second decoupling device (8) in such a way that it can transfer individual articles to this.

5. Apparatus according to claim 4, **characterised in that** additional decoupling devices and buffer devices are provided which are each connected with one another in such a way that they can transfer individual articles.

6. Apparatus according to claim 4, **characterised in that** the second buffer device (9) possesses a different number of gripper elements (19) than the first buffer device (6).

7. Apparatus according to claim 4, **characterised in that** the difference between the number of gripper elements (16) of the first buffer device (6) and the number of gripper elements (19) of the second buffer device (1) amounts to 1.

8. Apparatus according to at least one of the preceding claims, **characterised in that** a detection device (12) is provided which detects whether gripper elements (13a, 13b) of the first conveying apparatus (3, 3a, 3b) are occupied with individual articles.

9. Apparatus according to at least one of the preceding claims, **characterised in that** the movements of all buffer devices (6, 9) and decoupling devices (5, 8) are synchronised with one another.

10. Apparatus according to claim 1, **characterised in that** the movement of the first buffer device (6) can be controlled independently of the movement of the conveying apparatus (3, 3a, 3b).

11. Apparatus according to at least one of the preceding claims, **characterised in that** the decoupling device (5) is designed in the form of a radial decoupling device.

12. Apparatus according to at least one of the preceding claims, **characterised in that** the gripper elements (13a, 13b) are designed in the form of neck or body grippers.

13. Installation for the manufacture and processing of individual articles and in particular of containers with an apparatus for conveying individual articles according to at least one of the claims 1 to 11.

14. Installation according to claim 13, whereby the installation possesses a blowing apparatus for the containers and a labelling apparatus and the apparatus for conveying individual articles is arranged in the direction of transportation of the containers between the blowing apparatus and the labelling apparatus.

15. Method for conveying individual articles, in particular containers, from a first processing unit (21) to a second processing unit (22) via a conveying apparatus (3, 3a, 3b), comprising the steps:
- determination of an occupancy status of the individual gripper elements (13a, 13b) of the conveying apparatus by means of a detection device (12);
- transfer of separated individual articles from a first buffer device (6) to the conveying apparatus (3, 3a, 3b) when an unoccupied gripper element is detected by the detection device (12).

16. Method according to claim 13, **characterised in that** the first buffer device (6) is connected with the conveying apparatus (3, 3a, 3b) via a first decoupling device (5) in such a way that it can transfer containers to this.

17. Method according to at least one of the preceding claims 13 - 14, **characterised in that** a second buffer device (9) is provided which, at least intermittently, transfers individual articles to the first buffer device (6).

18. Method according to at least one of the preceding claims 13 - 15, **characterised in that** the second buffer device is substantially completely emptied.

19. Method according to at least one of the preceding claims 15 - 16, **characterised in that** the second buffer device (9), after being completely emptied, is completely filled with individual articles in a single working operation.

## Revendications

1. Dispositif de transport de pièces notamment de récipients comprenant une première installation de transport (3, 3a, 3b) transportant chaque pièce d'une première unité de traitement (21) vers une seconde unité de traitement (22), la première installation de transport comportant des éléments de préhension (13a, 13b) pour les pièces,
**caractérisé par**
une première installation tampon (6) ayant un nombre prédéfini d'éléments de préhension (16) pour les pièces, et qui coopère avec l'installation de transport (3, 3a, 3b) de façon à transférer les pièces séparées les unes des autres vers des éléments de préhension (13a, 13b) sélectionnés ou susceptibles d'être sélectionnés dans l'installation de transport (3, 3a, 3b).

2. Dispositif selon la revendication 1,
**caractérisé en ce qu'**
elle comporte une première installation de découplage (5) entre l'installation de transport (3, 3a, 3b) et la première installation tampon (6) et elle reprend les pièces séparées les unes des autres de la première installation tampon (6) pour les transférer à l'installation de transport (3, 3a, 3b).

3. Dispositif selon la revendication 1,
**caractérisé en ce que**
les éléments de préhension (15) de la première installation de découplage (5) sont majoritairement inoccupés.

4. Dispositif selon au moins l'une des revendications précédentes,
**caractérisé par**
une seconde installation de découplage (8) coopérant avec la première installation tampon (6) de façon à pouvoir transférer les pièces à celle-ci, ainsi qu'une seconde installation tampon (9) ayant un nombre prédéfini d'éléments de préhension (19) coopérant avec la seconde installation de découplage (8) pour lui transférer les pièces.

5. Dispositif selon la revendication 4,
**caractérisé par**
d'autres installations de découplage et installations tampon qui coopèrent respectivement les unes avec les autres pour transférer les pièces.

6. Dispositif selon la revendication 4,
**caractérisé en ce que**
la seconde installation tampon (9) comporte un autre nombre d'éléments de préhension (19) que la première installation tampon (6).

7. Dispositif selon la revendication 4,
**caractérisé en ce que**
la différence entre le nombre d'éléments de préhension (16) de la première installation tampon (6) et le nombre d'éléments de préhension (19) de la seconde installation tampon (9) correspond à la valeur 1.

8. Dispositif selon au moins l'une des revendications précédentes,
**caractérisé par**
une installation de détection (12) qui reconnaît si les éléments de préhension (13a, 13b) de la première installation de transport (3, 3a, 3b) sont occupés par des pièces.

9. Dispositif selon au moins l'une des revendications précédentes,
**caractérisé en ce que**
les mouvements de toutes les installations tampon (6, 9) et les installations de découplage (5, 8) sont synchronisés les uns par rapport aux autres.

10. Dispositif selon la revendication 1,
**caractérisé en ce que**
le mouvement de la première installation tampon (6) se commande indépendamment du mouvement de l'installation de transport (3, 3a, 3b).

11. Dispositif selon au moins l'une des revendications précédentes,
**caractérisé en ce que**
l'installation de découplage (5) est réalisée sous la forme d'une étoile de découplage.

12. Dispositif selon au moins l'une des revendications précédentes,
**caractérisé en ce que**
les éléments de préhension (13a, 13b) sont réalisés sous la forme d'éléments de préhension de col et/ou d'éléments de préhension de corps.

13. Installation pour fabriquer et traiter des pièces et notamment des récipients à l'aide d'un dispositif de transport de pièces selon au moins l'une des revendications 1 à 11.

14. Installation selon la revendication 13,
dans laquelle
il est prévu un dispositif de soufflage de récipient et une installation d'étiquetage et le dispositif de transport des pièces est prévu dans la direction de transport des récipients entre le dispositif de soufflage et l'installation d'étiquetage.

15. Procédé de transport de pièces notamment de récipients à partir d'une première unité de traitement (21) vers une seconde unité de traitement (22) par une installation de transport (3, 3a, 3b) et comprenant les étapes suivantes :
- détermination d'un état d'occupation des différents éléments de préhension (13a, 13b) de l'installation de transport par une installation de détection (12) ;
- transfert des pièces séparées les unes des autres d'une première installation tampon (6) vers l'installation de transport (3, 3a, 3b) si l'installation de détection (12) détecte un élément de préhension non occupé.

16. Procédé selon la revendication 13,
**caractérisé en ce que**
la première installation tampon (6) est reliée par une première installation de découplage (5) à l'installation de transport (3, 3a, 3b) de façon à pouvoir lui transférer des récipients.

17. Procédé selon au moins l'une des revendications précédentes 13-14,
**caractérisé par**
une seconde installation tampon (9) qui transfère au moins de temps en temps des pièces vers la première installation tampon (6).

18. Procédé selon au moins l'une des revendications précédentes 13-15,
**caractérisé en ce que**
la seconde installation tampon est en pratique complètement vidée.

19. Procédé selon au moins l'une des revendications précédentes 15-16,
**caractérisé en ce que**
la seconde installation tampon (9) après avoir été vidée complètement, est remplie complètement de pièces au cours d'une opération de travail.
